# EUROPÄISCHE PATENTANMELDUNG

(11) **EP 1 273 929 A2**
(43) Veröffentlichungstag der Anmeldung: **08.01.2003**
(21) Anmeldenummer: 02013576.0
(22) Anmeldetag: 20.06.2002
(51) Int. Cl.: G01S 11/14, B66B 1/34

(54) **Verfahren und Einrichtung zur Positionserfassung**

(30) Priorität: 07.07.2001 DE 10133171
(71) Anmelder: K.A. SCHMERSAL GmbH & Co., D-42279 Wuppertal (DE)
(72) Erfinder: Oelschlegel, Christian, 58089 Hagen (DE)
(74) Vertreter: Sparing - Röhl - Henseler Patentanwälte

(57) **Zusammenfassung**

Die Erfindung betrifft die Positionserfassung eines längs eines Schallsignalleiters (3) aus ferromagnetischem Material beweglichen Gegenstandes, wobei mit einem mit einem Signalgeber (8) verbundenen Signaleinkoppler (9) ein Schallsignal (S) in den Schallsignalleiter (3) getaktet eingekoppelt, mittels eines Signalauskopplers (10) ausgekoppelt und das ausgekoppelte Signal von einer Auswerteschaltung (11) zur Erzeugung eines für die momentane Position des Gegenstandes repräsentativem Signal ausgewertet wird, wobei jeweils nach Einkopplung des Schallsignals (S) entweder ein magnetisches Gegenfeld (E) für das durch das Schallsignal (S) erzeugte Magnetfeld eingekoppelt wird.

## Beschreibung

Die Erfindung betrifft ein Verfahren und eine Einrichtung zur Positionserfassung nach dem Oberbegriff des Anspruchs 1, 4, 11 bzw. 14.

Aus EP 1 065 517 A1 ist eine Einrichtung zur Positionserfassung eines längs eines vertikalen Schachtes beweglichen Aufzugkorbs mit einem im Schacht lotrecht gespannten, ferromagnetischen Schallsignalleiter mit vorbestimmter, im wesentlichen gleichmäßiger Schallausbreitungsgeschwindigkeit sowie mit einem mit einem Signalgeber verbundenen, an dem Aufzugkorb befindlichen Signaleinkoppler zum Einkoppeln eines Schallsignals in den Schallsignalleiter bekannt. Hierbei ist benachbart zu wenigstens einem Ende des Schallsignalleiters ein Signalauskoppler angeordnet, der mit einer Auswerteschaltung zur Erzeugung eines für die momentane Position des Aufzugkorbs repräsentativem Signal verbunden ist. Der Schallsignalleiter kann zumindest an einem Ende einen Schallsignaldämpfer aufweisen. Der Signaleinkoppler ist hierbei durch die Auswerteschaltung in Zeitabständen triggerbar, die so groß sind, daß keine Überlagerungen mit vorherigen, vom Signaleinkoppler eingekoppelten und anschließend an den Enden des Schallsignalleiters reflektierten Schallsignalen auftreten.

Eine ähnliche Einrichtung zur Positionserfassung, bei der zusätzlich Eichsignale in den Schallsignalleiter eingekoppelt werden, ist aus DE 199 03 644 C1 bekannt. Eine weitere Einrichtung zum Messen der Länge einer Meßstrecke von einem vorbestimmten Punkt bis zu einem entlang der Meßstrecke verfahrbaren Gegenstand ist aus DE 100 06 379 A1 bekannt, wobei der Gegenstand zwei Signaleinkoppler für Schallsignale aufweist.

Bei derartigen Einrichtungen zur Positionserfassung wurde festgestellt, daß Probleme bezüglich der Schallsignalübertragung zum Signalauskoppler bei größeren Längen des Schallsignalleiters auftreten. Nähere Untersuchungen ergaben, daß infolgedessen, daß durch den Signaleinkoppler zum Einkoppeln des Schallsignals ein Magnetfeld erzeugt wird, das den Schallsignalleiter durchfließt, durch Remanenz ein kleines Restfeld verbleibt, das zur Bedämpfung von Schallsignalen führt. Zwar liegt diese in der Größenordnung von 15 bis 30x10⁻⁶ Nepers/m, jedoch führt dies letztlich dazu, daß bei einer Länge von 130 m des Schallsignalleiters das Schallsignal um bis zu mehr als 50% bedämpft sein kann.

Aufgabe der Erfindung ist es, ein Verfahren und eine Einrichtung nach dem Oberbegriff des Anspruchs 1, 4, 11 bzw. 14 zu schaffen, die es ermöglichen, eine wesentliche Schallsignaldämpfung durch den Schallsignalleiter selbst bei großen Längen des Schallsignalleiters zu vermeiden.

Diese Aufgabe wird entsprechend dem kennzeichnenden Teil des Anspruchs 1, 4, 11 bzw. 14 gelöst.

Hierbei wird eine dem eingekoppelten Schallsignal zugeordnete Kompensations-Energie in den Schallsignalleiter eingekoppelt, die eine Koerzitivkraft erzeugt, die bewirkt, daß der durch die Einkoppelung des Schallsignals restmagnetisierte Schallsignalleiter im wesentlichen entmagnetisiert oder dieses Magnetfeld im wesentlichen zu einem entsprechenden Magnetfeld entgegengesetzter Richtung überkompensiert wird. Im ersten Fall folgt die Kompensation-Energie dem eingekoppelten Schallsignal und führt im wesentlichen zu einer Entmagnetisierung. Hierdurch kann erreicht werden, daß die Bedämpfung <10⁻⁶ Nepers/m ist, so daß selbst bei großen Längen des Schallsignalleiters oder Verwendung eines an einem Ende des Schallsignalleiters reflektierten Schallsignals die Bedämpfung genügend klein bleibt, um eine einwandfreie Auskopplung durch den Signalauskoppler zu gewährleisten. Im zweiten Fall wird soweit überkompensiert oder gegenmagnetisiert, daß ein später eingekoppeltes Schallsignal einen Schallsignalleiter mit einem Magnetfeld entgegengesetzter Richtung und Größe zu dem von ihm selbst erzeugten vorfindet, so daß auch dann die Bedämpfung des durch den Schallsignalleiter laufenden Schallsignals entsprechend klein bleibt. Diese Kompensation oder Überkompensation wird zweckmäßigerwesie für jegliche Art von eingekoppelten Schallsignalen verwendet, ob diese nun beispielsweise zum Messen, Eichen od.dgl. dienen.

Die Kompensationsenergie kann beispielsweise durch Erhitzung auf Curie-Temperatur, mechanische Klopfen oder Magnetfelder und insbesondere durch wenigstens ein dem Schallsignal nachfolgendes Kompensations-Schallsignal eingebracht werden.

Für die Schallsignale wird ein Signaleinkoppler vorgesehen, der entweder ortsfest etwa an einem Ende des Schallsignalleiters angeordnet sein kann, während ein entsprechender Signalauskoppler am beweglichen Gegenstand, etwa einem Aufzugkorb, angeordnet ist, oder der am beweglichen Gegenstand angeordnet ist, während sich der Signalauskoppler ortsfest im Bereich eines Endes des Schallsignalleiters befindet.

Weitere Ausgestaltungen der Erfindung sind der nachfolgenden Beschreibung und den Unteransprüchen zu entnehmen.

Die Erfindung wird nachstehend anhand von in den beigefügten Abbildungen schematisch dargestellten Ausführungsbeispielen näher erläutert.

Fig. 1 zeigt schematisch einen in einem Schacht angeordneten Aufzug mit einer Einrichtung zur Positionsbestimmung.

Fig. 2 zeigt eine Ausführungsform einer von der Einrichtung zur Positionsbestimmung verwendeten Impulsfolge.

Fig. 3 zeigt eine weitere Ausführungsform einer von der Einrichtung zur Positionsbestimmung verwendeten Impulsfolge.

In einem Schacht 1 ist ein (nicht im einzelnen dargestellter) in diesem vertikal verfahrbarer Aufzug mit einem Aufzugkorb 2 vorgesehen. Außerdem befindet sich in dem Schacht 1 ein ferromagnetischer Schallsignalleiter 3, der über eine Aufhängung 4 am Schachtkopf mechanisch befestigt ist, während ein Gewicht 5 gegebenenfalls zusammen mit einem Dämpfer 6 am unteren Ende des sich im wesentlichen über die Höhe des Schachtes 1 erstreckenden Schallsignalleiters 3 den Schallsignalleiter 3 spannt und lotrecht im Schacht 1 hält.

Der metallische, insbesondere magnetostriktive Schallsignalleiter 3 besitzt eine vorbestimmte, im wesentlichen gleichmäßige Ausbreitungsgeschwindigkeit für den Schall und ist insbesondere ein Metalldraht, der zweckmäßigerweise einen Durchmesser in der Größenordnung von etwa 1 mm besitzt.

Der Aufzugkorb 2 ist mit einer Sendeeinheit 7 für ein getaktetes Schallsignal im Ultraschallbereich versehen, die einen Signalgeber 8 mit Taktgeber und einen am Aufzugkorb 2 befindlichen Signaleinkoppler 9 zum Einkoppeln des Schallsignals in den Schallsignalleiter 3 aufweist. Ein von letzterem eingekoppeltes Schallsignal breitet sich zu beiden Enden des Schallsignalleiters 3 hin aus und wird dort jeweils reflektiert sowie beim Durchlaufen des gegebenenfalls vorgesehenen Dämpfers 6 durch diesen gedämpft.

Benachbart zu einem Ende des Schallsignalleiters 3, dargestellt benachbart zum oberen Ende, ist ein Signalauskoppler 10 vorgesehen, der mit einer Auswerteschaltung 11 zur Erzeugung eines für die momentane Position des Aufzugkorbs 2 repräsentativem Signal verbunden ist.

Die Auswerteschaltung 11 dient dazu, die Schallaufzeitmessung und die Positionsberechnung des Aufzugkorbs 2 durchzuführen sowie die Ausgabe der Position des Aufzugkorbs 2 gegebenenfalls mit extrapolierten Zwischenpositionen zwischen den tatsächlich gemessenen auszugeben.

Die Auswerteschaltung 11, die vorzugsweise auch einen Mikroprozessor umfaßt, kann auch dazu dienen, die Sendeeinheit 7 zu triggern, d.h. dazu zu veranlassen, ein Schallsignal in den Schallsignalleiter 3 einzukoppeln. Der entsprechende Triggerimpuls kann hierbei über ein Schleppkabel des Aufzugkorbs 2 übermittelt werden. Er kann aber auch über einen Lichtleiter und Optokoppler oder über Funk übermittelt werden, wobei bei letzterer der Schallsignalleiter 3 als Antenne für eine den Schallsignalleiter 3 umgreifende, am Aufzugkorb 2 befestigte Empfangsspule dienen kann. - Der Signalgeber 8 kann aber auch einen von der Auswerteschaltung 11 unabhängigen Taktgeber umfassen.

Der Taktgeber des Signalgebers 8 erzeugt entweder infolge Triggern durch die Auswerteschaltung 11 oder unabhängig von dieser in einem vorbestimmten Takt Schallsignale S, die nach Empfang durch den Signalauskoppler 10 von der Auswerteschaltung 11 ausgewertet werden.

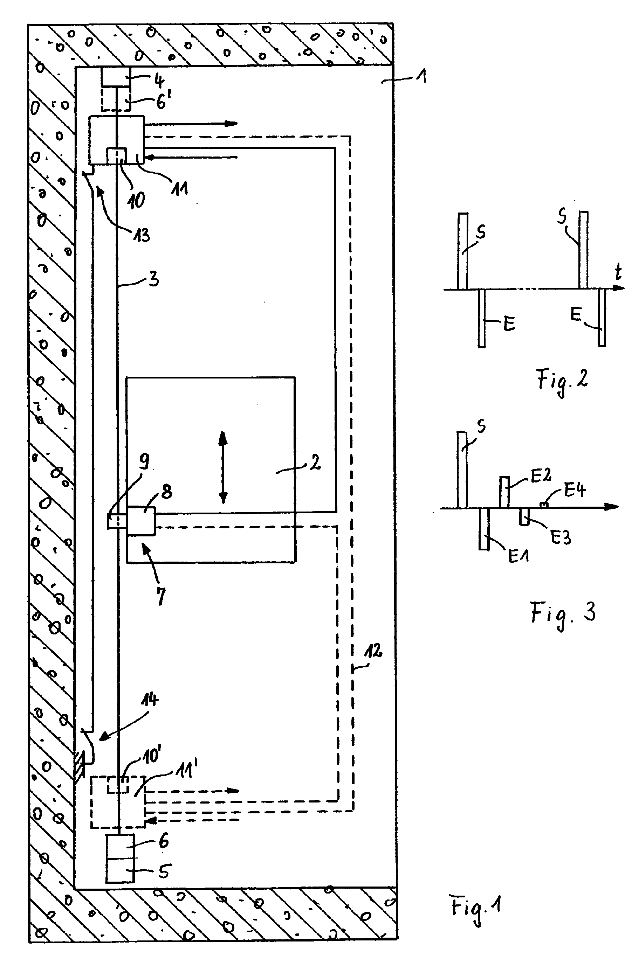

Außerdem wird entsprechend Fig. 2 jeweils ein dem Schallsignal S nachfolgendes Kompensations-Schallsignal E mit entgegengesetzter Phase erzeugt. Insbesondere wird hierbei ein Kompensations-Schallsignal E mit einer entsprechend der Hystereseschleife des ferromagnetischen Materials des Schallsignalleiters 3 geringeren Länge und/oder kleineren Amplitude als das vorher eingekoppelte Schallsignal S verwendet. Zwischen dem eingekoppelten Schallsignal S und dem nachfolgenden Kompensations-Schallsignal E wird zweckmäßigerweise ein Zeitabstand vorgesehen wird, der größer als die Wellenlänge des Schallsignals S, jedoch wesentlich kleiner als der Taktabstand zwischen den Schallsignalen S ist, um Überlagerungen zwischen den Schallsignalen S und E zu vermeiden. Hierdurch wird der Schallsignalleiter 3 wirksam entmagnetisiert und dämpft daher selbst bei großer Schallsignalleiterlänge nachfolgende Schallsignale S nur unwesentlich.

Entsprechendes wird erreicht, wenn dem jeweiligen Schallsignal S eine Folge von Kompensations-Schallsignalen E1, E2, E3, E4 gemäß Fig. 3 folgen, wobei das erste Kompensations-Schallsignal E1 eine zum Schallsignal S entgegengesetzte Phase und die nachfolgenden Kompensations-Schallsignale E2, E3, E4 wiederum jeweils entgegengesetzte Phasen zu E1 und zueinander haben. Hierbei wird ebenfalls zweckmäßigerweise zwischen den Schallsignalen S, E1, E2, E3, E4 ein Zeitabstand vorgesehen, der größer als die Wellenlänge des Schallsignals S, jedoch wesentlich kleiner als der Taktabstand zwischen den Schallsignalen S ist, um Überlagerungen zwischen den Schallsignalen S und E zu vermeiden.

Die Kompensations-Schallsignale E1, E2, E3, E4 nehmen hierbei gleichmäßig, d.h. linear, oder insbesondere zunehmend entsprechend einer Exponentialkurve, etwa einer Parabel, in der Amplitude ab, wobei die Amplitude des Schallsignals S einbezogen ist.

Gegebenenfalls ist es auch zweckmäßig, am jeweils anderen Ende des Schallsignalleiters 3 einen weiteren Signalauskoppler 10' und eine weitere Auswerteeinheit 11' vorzusehen. Hierdurch läßt sich die Positionsbestimmung des Aufzugkorbs 2 zweikanalig, d.h. redundant vornehmen.

Im Schacht 1 können mindestens zwei Schalter 13, 14 vorgesehen sein, die beim Überfahren durch den Aufzugkorb 2 betätigt werden und dabei ein Signal an die Auswerteeinheit 11 liefern. Letztere speichert beispielsweise eine Tabelle bezüglich der Punkte des Überfahrens der Schalter 13, 14 bei einer bestimmten Temperatur von beispielsweise 20°C. Die Positionsbestimmung wird dann entsprechend den Abweichungen von dieser Tabelle korrigiert, wodurch Längenänderungen eines den Schacht 1 aufweisenden Gebäudes in ihren Auswirkungen auf die Positionsbestimmung des Aufzugkorbs 2 berücksichtigt werden können.

Die beiden Schalter 13, 14 sind in dem dargestellten Ausführungsbeispiel als Öffner in Serienschaltung vorgesehen. Möglich ist aber auch eine Parallelschaltung mit den Schaltern 13, 14 als Schließer. Auch der Einzelanschluß der Schalter 13, 14 ist möglich. Wenn zwei Auswerteeinheiten 11, 11' vorgesehen sind, kann ein Teil der Schalter 13, 14 auch mit einer Auswerteeinheit 11 und der andere Teil mit der anderen Auswerteeinheit 11' gekoppelt sein.

Bei dem längs des Schallsignalleiters 3 beweglichen Gegenstand braucht es sich nicht um einen Aufzugkorb 2 zu handeln, sondern es kommen auch andere Gegenstände infrage. Abgesehen davon braucht der Schallsignalleiter 3 auch nicht vertikal angeordnet sein, sondern kann irgendeine Orientierung entsprechend dem Bewegungsverlauf des Gegenstandes aufweisen, z.B. horizontal angeordnet sein.

## Patentansprüche

1. Verfahren zur Positionserfassung eines längs eines Schallsignalleiters (3) aus ferromagnetischem Material beweglichen Gegenstandes, insbesondere eines längs eines vertikalen Schachtes (1) beweglichen Aufzugkorbs (2), wobei mit einem mit einem Signalgeber (8) verbundenen Signaleinkoppler (9) ein Schallsignal (S) in den Schallsignalleiter (3) getaktet eingekoppelt, mittels eines Signalauskopplers (10) ausgekoppelt und das ausgekoppelte Signal von einer Auswerteschaltung (11) zur Erzeugung eines für die momentane Position des Gegenstandes repräsentativem Signal ausgewertet wird, **dadurch gekennzeichnet, daß** nach Einkopplung des Schallsignals (S) ein magnetisches Gegenfeld zur Kompensation der von der Einkopplung des Schallsignals (S) stammenden Restmagnetisierung angelegt wird.

2. Verfahren nach Anspruch 1, **dadurch gekennzeichnet, daß** die Kompensationsenergie als Kompensations-Schallsignal (E) mit entgegengesetzter Phase zu derjenigen des Schallsignals (S) eingekoppelt wird.

3. Verfahren nach Anspruch 2, **dadurch gekennzeichnet, daß** ein Kompensations-Schallsignal (E) mit einer entsprechend der Hystereseschleife des ferromagnetischen Materials des Schallsignalleiters (3) geringeren Länge und/oder kleineren Amplitude als das vorher eingekoppelte Schallsignal (S) verwendet wird.

4. Verfahren zur Positionserfassung eines längs eines Schallsignalleiters (3) aus ferromagnetischem Material beweglichen Gegenstandes, insbesondere eines längs eines vertikalen Schachtes (1) beweglichen Aufzugkorbs (2), wobei mit einem mit einem Signalgeber (8) verbundenen Signaleinkoppler (9) ein Schallsignal (S) in den Schallsignalleiter (3) getaktet eingekoppelt, mittels eines Signalauskopplers (10) ausgekoppelt und das ausgekoppelte Signal von einer Auswerteschaltung (11) zur Erzeugung eines für die momentane Position des Gegenstandes repräsentativem Signal ausgewertet wird, **dadurch gekennzeichnet, daß** jeweils nach Einkopplung des Schallsignals (S) mehrere Kompensations-Schallsignale (E1, E2, E3, E4) mit entgegengesetzter Phase zum eingekoppelten Schallsignal (S) beginnend und nachfolgend jeweils wechselnden Phasen und abnehmender Amplitude eingekoppelt werden.

5. Verfahren nach Anspruch 4, **dadurch gekennzeichnet, daß** Entmagnetisierungs-Schallsignale (E1, E2, E3, E4) mit entsprechend einer Exponentialkurve abnehmender Amplitude verwendet werden.

6. Verfahren nach einem der Ansprüche 1 bis 5, **dadurch gekennzeichnet, daß** der Signaleinkoppler (8) an dem beweglichen Gegenstand befindlich mit diesem verfahren wird, während das Schallsignal (S) benachbart zu wenigstens einem Ende des Schallsignalleiters (3) durch den Signalauskoppler (10) ausgekoppelt wird.

7. Verfahren nach einem der Ansprüche 1 bis 5, **dadurch gekennzeichnet, daß** das Schallsignal (S) benachbart zu einem Ende des Schallsignalleiters (3) durch den Signaleinkoppler (8) eingekoppelt und durch den am beweglichen Gegenstand befindlichen Signalauskoppler (10) ausgekoppelt wird.

8. Verfahren nach einem der Ansprüche 1 bis 7, **dadurch gekennzeichnet, daß** zwischen dem eingekoppelten Schallsignal (S) und dem oder den nachfolgenden Kompensations-Schallsignalen (E, E1, E2, E3, E4) ein Zeitabstand vorgesehen wird, der größer als die Wellenlänge des Schallsignals (S) ist.

9. Verfahren nach einem der Ansprüche 1 bis 8, **dadurch gekennzeichnet, daß** die von der Einkopplung des Schallsignals (S) stammende Restmagnetisierung nahezu kompensiert wird.

10. Verfahren nach einem der Ansprüche 1 bis 8, **dadurch gekennzeichnet, daß** die von der Einkopplung des Schallsignals (S) stammende Restmagnetisierung z u einem entsprechenden Magnetfeld entgegengesetzter Richtung überkompensiert wird.

11. Einrichtung zur Positionserfassung eines längs eines Schallsignalleiters (3) aus ferromagnetischem Material beweglichen Gegenstandes, insbesondere eines längs eines vertikalen Schachtes (1) beweglichen Aufzugkorbs (2), mit einem mit einem Signalgeber (8) verbundenen Signaleinkoppler (9) zum getakteten Einkoppeln eines Schallsignals (S) in den Schallsignalleiter (3) und einem Signalauskoppler (10), der mit einer Auswerteschaltung (11) zur Erzeugung eines für die momentane Position des Gegenstandes repräsentativem Signal verbunden ist, **dadurch gekennzeichnet, daß** jeweils nach Einkopplung des Schallsignals (S) ein magnetisches Gegenfeld (E) zur Kompensation der von der Einkopplung des Schallsignals (S) stammenden Restmagnetisierung einkoppelbar ist.

12. Einrichtung nach Anspruch 11, **dadurch gekennzeichnet, daß** die Kompensationsenergie als mindestens ein Kompensations-Schallsignal (E) vom Signlaeinkoppler (8) einkoppelbar ist.

13. Einrichtung nach Anspruch 12, **dadurch gekennzeichnet, daß** das Kompensations-Schallsignal (E) eine entsprechend der Hystereseschleife des ferromagnetischen Materials des Schallsignalleiters (3) geringere Länge und/oder kleinere Amplitude als das vorher eingekoppelte Schallsignal aufweist.

14. Einrichtung zur Positionserfassung eines längs eines Schallsignalleiters (3) aus ferromagnetischem Material beweglichen Gegenstandes, insbesondere eines längs eines vertikalen Schachtes (1) beweglichen Aufzugkorbs (2), mit einem mit einem Signalgeber (8) verbundenen Signaleinkoppler (9) zum getakteten Einkoppeln eines Schallsignals (S) in den Schallsignalleiter (3) und einem Signalauskoppler (10), der mit einer Auswerteschaltung (11) zur Erzeugung eines für die momentane Position des Gegenstandes repräsentativem Signal verbunden ist, **dadurch gekennzeichnet, daß** jeweils nach Einkopplung des Schallsignals (S) eine Folge von mehreren Kompensations-Schallsignalen (E1, E2, E3, E4) mit entgegengesetzter Phase zum eingekoppelten Schallsignal (S) beginnend und nachfolgend jeweils wechselnden Phasen und abnehmender Amplitude einkoppelbar sind.

15. Einrichtung nach Anspruch 14, **dadurch gekennzeichnet, daß** die Kompensations-Schallsignale (E1, E2, E3, E4) eine entsprechend einer Exponentialkurve abnehmende Amplitude aufweisen.

16. Einrichtung nach einem der Ansprüche 11 bis 15, **dadurch gekennzeichnet, daß** zwischen dem eingekoppelten Schallsignal (S) und dem oder den nachfolgenden Entmagnetisierungs-Schallsignalen (E, E1, E2, E3, E4) ein Zeitabstand vorgesehen wird, der größer als die Wellenlänge des Schallsignals (S) ist.

17. Einrichtung nach einem der Ansprüche 11 bis 16, **dadurch gekennzeichnet, daß** der Signaleinkoppler (8) an dem beweglichen Gegenstand und ein Signalauskoppler (10) benachbart zu wenigstens einem Ende des Schallsignalleiters (3) angeordnet sind.

18. Einrichtung nach einem der Ansprüche 11 bis 16, **dadurch gekennzeichnet, daß** benachbart zu einem Ende des Schallsignalleiters (3) der Signaleinkoppler (8) und am beweglichen Gegenstand der Signalauskoppler (10) angeordnet sind.

19. Einrichtung nach einem der Ansprüche 11 bis 18, **dadurch gekennzeichnet, daß** das magnetische Gegenfeld so einstellbar ist, daß zumindest nahezu eine Entmagnetisierung des Schallsignalleiters (3) bewirkt wird.

20. Einrichtung nach einem der Ansprüche 11 bis 18, **dadurch gekennzeichnet, daß** das magnetische Gegenfeld so einstellbar ist, daß eine Überkompensation des durch das Schallsignal (S) erzeugten Magnetfeldes in entgegengesetzter Richtung hiervon im wesentlichen in der Größe hiervon bewirkt wird.
